# FASCICULE DE BREVET EUROPEEN

(11) **EP 0 806 802 B1**
(45) Date de publication et mention de la délivrance du brevet: **24.07.2002**
(21) Numéro de dépôt: 97401011.8
(22) Date de dépôt: 05.05.1997
(51) Int. Cl.: H01M 4/32, H01M 4/52

(54) **Eletrode au nickel de type empâté**
Verpastene Nickelelektrode
Pasted nickel electrode

(30) Priorité: 07.05.1996 FR 9605716
(43) Date de publication de la demande: 12.11.1997
(73) Titulaire: SAFT, F-93230 Romainville (FR)
(72) Inventeur: Bernard, Patrick, 91300 Massy (FR); Simonneau, Olivier, 91410 Dourdan (FR); Bertrand, Françoise, 91130 Ris Orangis (FR)
(74) Mandataire: Fournier, Michel Robert Marie

(56) Documents cités:
- EP-A- 0 587 973
- EP-A- 0 696 076
- EP-A- 0 723 305
- WO-A-94/11910

## Description

La présente invention concerne une électrode au nickel de type empâté, utilisée notamment comme électrode positive dans un accumulateur à électrolyte alcalin. Elle s'étend en outre à son procédé de préparation.

Il existe plusieurs types d'électrode susceptible d'être utilisée dans un accumulateur à électrolyte alcalin comme une électrode de type pochette, une électrode de type fritté, et une électrode de type empâté dite aussi non-fritté. Les électrodes les plus largement employées aujourd'hui sont de type empâté. Par rapport aux autres types d'électrode, une électrode de type empâté contient une plus grande quantité de matière active, sa capacité volumique est donc augmentée, et son coût de fabrication est plus faible.

Une électrode de type empâté est réalisée par dépôt d'une pâte sur un support conducteur bidimensionnel comme un métal déployé, une grille, un tissu ou un feuillard plein ou perforé, ou bien dans un support conducteur tridimensionnel poreux comme un feutre ou une mousse métallique ou en carbone. La pâte comporte comme constituants principaux la matière active, habituellement sous forme de poudre, et un liant polymère auxquels on ajoute le plus souvent un matériau conducteur. Lors de la fabrication de l'électrode, un solvant volatil est ajouté à la pâte pour ajuster sa viscosité afin de faciliter la mise en forme. Une fois la pâte déposée sur ou dans le support, l'ensemble est comprimé et séché pour obtenir une électrode de la densité et de l'épaisseur souhaitée.

Dans une électrode de nickel de type empâté, la matière active est constituée d'un hydroxyde à base de nickel. L'hydroxyde de nickel est un composé peu conducteur qui nécessite l'adjonction dans l'électrode d'un matériau permettant une bonne percolation électrique.

On a proposé d'ajouter en outre à la pâte un matériau conducteur pulvérulent qui peut être par exemple un composé du cobalt tel que du cobalt métallique Co, un hydroxyde de cobalt Co(OH)2 et/ou un oxyde de cobalt CoO (EP-0 587 973). Lors de la première charge, ce composé s'oxyde en oxyhydroxyde de cobalt CoOOH dans lequel le cobalt est porté au degré d'oxydation +3. Cet oxyhydroxyde est stable dans le domaine normal de fonctionnement de l'électrode positive au nickel et insoluble dans l'électrolyte alcalin (KOH). Il assure la percolation électrique de l'électrode.

Stocké à l'état complètement déchargé, un accumulateur alcalin possédant une électrode positive au nickel de type empâté voit sa tension décroître avec le temps. Lorsque la durée du stockage dépasse quelques mois, sa tension tend vers 0 Volt. Dans ces conditions l'oxyhydroxyde de cobalt CoOOH se réduit lentement. Le cobalt est porté d'abord au degré d'oxydation +2,66 dans Co3O4, puis il atteint le degré d'oxydation +2 dans Co(OH)2.

Or l'hydroxyde de cobalt Co(OH)2 est très soluble dans l'électrolyte. Par conséquent on observe après une période de stockage de plusieurs mois une perte de la conductivité due à la dissolution partielle du réseau percolant de l'électrode empâtée. Il en résulte une perte irréversible de capacité qui peut dépasser 10%. Cette perte se produit quel que soit le composé de cobalt initialement introduit dans la pâte.

On a décrit une électrode dans laquelle la surface des particules d'hydroxyde de nickel est recouverte par de l'hydroxyde de cobalt. Mais au cours du cyclage l'hydroxyde de cobalt diffuse dans les particules d'hydroxyde de nickel et la capacité de l'électrode décroît. Afin de résoudre ce problème le document EP-0 696 076 propose de recouvrir la surface de l'hydroxyde de nickel par des cristaux mixtes comprenant de l'hydroxyde de cobalt et un hydroxyde d'au moins un métal parmi l'aluminium, le magnésium, l'indium et le zinc. Ceci permet de réduire la diffusion de l'hydroxyde de cobalt sans toutefois la supprimer complètement. En outre cette solution a pour inconvénient de rendre plus complexe le procédé de fabrication de la matière active.

La présente invention a pour but de proposer une électrode de type empâté dont la perte irréversible de capacité en stockage est sensiblement réduite par rapport aux électrodes actuellement connues.

La présente invention a aussi pour but de proposer une électrode de type empâté dont le procédé de fabrication soit simplifié.

L'objet de la présente invention est une électrode au nickel de type empâté pour accumulateur à électrolyte alcalin comprenant un collecteur de courant et une pâte contenant un hydroxyde à base de nickel et un composé oxydé du cobalt syncristallisé avec au moins un autre élément, caractérisée en ce que ledit hydroxyde forme une première poudre et que ledit composé forme une deuxième poudre distincte de ladite première poudre, lesdites poudres étant mélangées mécaniquement au sein de ladite pâte.

Le composé oxydé à base de cobalt ne se trouve pas ainsi au contact direct des particules d'hydroxyde de nickel et par conséquent le risque de diffusion est supprimé. En outre l'ajout du composé à base de cobalt s'effectue par un simple mélange de poudres.

Il est bien entendu que le terme "hydroxyde de nickel" utilisé dans la présente demande signifie aussi bien un hydroxyde de nickel qu'un hydroxyde contenant principalement du nickel mais également au moins un hydroxyde syncristallisé d'un métal choisi parmi le cobalt, le cadmium, le zinc, le calcium et le magnésium.

Dans l'électrode selon l'invention, ledit composé oxydé du cobalt est au degré d'oxydation +2 et peut être porté au degré d'oxydation +3 lors de la première charge. Ledit élément est choisi de telle sorte que, lorsque ladite électrode est stockée au contact dudit électrolyte, la réductibilité dudit composé soit moindre que celle d'un composé contenant seulement du cobalt.

Le composé du cobalt au degré d'oxydation +2 selon l'invention s'oxyde lors de la première charge en un oxyhydroxyde qui est électrochimiquement plus stable, donc moins réductible, dans les mêmes conditions qu'un oxyhydroxyde de cobalt ne contenant pas d'élément syncristallisé. On entend par plus stable que le composé selon l'invention porté au degré d'oxydation +3 résiste mieux à la réduction, principalement parce que sa vitesse de réduction est plus lente que celle du cobalt. Par conséquent, à durée de stockage équivalente, la perte irréversible de capacité est sensiblement réduite par rapport à celle observée dans le cas du cobalt de degré d'oxydation +3.

De préférence, ledit composé oxydé du cobalt au degré d'oxydation +2 est choisi parmi un oxyde de cobalt et un hydroxyde de cobalt. Lorsque le composé oxydé du cobalt est l'oxyde de cobalt contenant un élément syncristallisé, il peut être obtenu par déshydratation de l'hydroxyde de cobalt correspondant.

Selon une forme d'exécution préférentielle, le composé oxydé du cobalt contient au moins un élément syncristallisé choisi parmi l'antimoine, l'argent, l'aluminium, le baryum, le calcium, le cérium, le chrome, le cuivre, l'étain, le fer, le lanthane, le manganèse, le magnésium, le plomb, le scandium, le silicium, le titane, et l'yttrium.

De préférence le composé oxydé du cobalt contient une proportion dudit élément comprise entre 0,5% et 30% en poids dudit composé. Au-delà de 30%, on n'observe pas de réduction notable de la perte de capacité en stockage.

Selon un mode de réalisation de l'électrode de l'invention, le collecteur de courant est une mousse de nickel et ladite pâte contient ladite matière active, ledit matériau conducteur, un premier liant à base de polytétrafluoroéthylène (PTFE) et un deuxième liant choisi parmi la carboxyméthylcellulose (CMC) et l'hydroxypropylméthylcellulose (HPMC).

La présente invention a également pour objet un procédé de fabrication d'une électrode comprenant les étapes suivantes effectuées sous atmosphère non-oxydante:
a - on réalise une solution aqueuse contenant un sel de cobalt et un sel dudit élément,
b - on ajoute lentement dans ladite solution une base forte pour précipiter ledit composé,
c - on laisse séjourner ledit composé dans ladite solution pendant une durée comprise entre une heure et dix heures,
d - on sépare ledit composé de ladite solution par filtration, lavage et séchage,
e - on broie ledit composé.

Toutes ces étapes sont réalisées sous atmosphère inerte dans le but d'éviter tout contact avec l'oxygène, afin de pallier aux risques d'oxydation de l'hydroxyde de cobalt ainsi obtenu.

Selon une variante d'exécution de l'invention, le rapport du poids dudit élément au poids de cobalt dans ladite solution aqueuse est identique à celui dudit composé oxydé du cobalt que l'on souhaite obtenir.

De préférence, la solution aqueuse est maintenue à une température comprise entre 20°C et 80°C.

De préférence, la base forte est ajoutée sous la forme d'une solution aqueuse, la durée de l'ajout étant comprise entre 15 minutes et 60 minutes.

De préférence, le séchage est effectué à une température comprise entre 40°C et 80°C.

Dans la solution aqueuse, le sel de cobalt et le sel dudit élément peuvent être identiques ou différents. De préférence, le sel de cobalt est choisi parmi un nitrate, un sulfate et un chlorure de cobalt, et le sel dudit élément est choisi parmi un nitrate, un sulfate et un chlorure dudit élément.

L'invention sera mieux comprise et d'autres avantages et particularités apparaîtront à la lecture des exemples suivants de réalisation, donnés à titre illustratif et non limitatif.

### EXEMPLE 1

On réalise une électrode, n'appartenant pas à la présente invention, contenant de l'hydroxyde de cobalt fabriqué de la manière suivante. On utilise un réacteur de précipitation muni d'une double enveloppe pour permettre la régulation homogène de la température, et d'un dispositif d'agitation comportant un mobile et des contre-pales autorisant le contrôle des conditions hydrodynamiques de la synthèse.

Dans le réacteur sous atmosphère inerte et maintenu à une température constante de 50°C, on introduit 0,5 1 d'une solution aqueuse à une concentration 1M en sulfate de cobalt. On y ajoute 650 g d'une solution de soude caustique NaOH à une concentration 2M selon un débit constant et continu pendant 30 minutes. Lorsque l'ajout de soude est terminé, la solution est maintenue sous agitation et chauffage constants pendant 2 heures afin de réaliser un mûrissement des particules d'hydroxyde de cobalt. Le précipité obtenu est alors filtré sur un büchner et lavé à température ambiante par de l'eau distillée sous atmosphère inerte. Le précipité est ensuite séché sous vide pendant 24 heures à une température de 70°C, après un balayage de l'étuve par un gaz inerte. Le produit est ensuite broyé sous atmosphère inerte.

On réalise une pâte dont la composition exprimée en pourcentage pondéral par rapport au poids de pâte est approximativement la suivante :
- une poudre d'hydroxyde composé majoritairement de nickel, contenant environ 2 % d'hydroxyde de cobalt syncristallisé et environ 4 % d'hydroxyde de zinc syncristallisé : 66 %,
- Co métal : 1 %,
- un composé oxydé du cobalt qui est l'hydroxyde de cobalt Co(OH)₂ obtenu selon la méthode décrite précédemment : 6 %.
- eau : 25,4 %,
- un gel à base de CMC : 0,1 %
- PTFE : 1,5 %

Une électrode au nickel est fabriquée en introduisant cette pâte dans une mousse de nickel ayant une porosité de l'ordre de 95%. Un accumulateur cylindrique I de type nickel-cadmium étanche de format AA (ou R6) a été assemblé qui contient l'électrode au nickel précédemment fabriquée et une électrode de cadmium de type connu de capacité supérieure à celle de l'électrode au nickel. Les deux électrodes spiralées sont séparées par une couche de polyamide non tissé. L'accumulateur est imprégné d'un électrolyte alcalin composé d'une solution aqueuse de potasse KOH 9,1M et de lithium LiOH 0,2M.

Après un repos de 48 heures, l'accumulateur est soumis à un test de cyclage électrochimique dans les conditions suivantes:
- cycle 1:: charge à 0,1.Ic pendant 10 heures à 20°C, où Ic est le courant nécessaire pour décharger la capacité nominale Cn d'un accumulateur en 1 heure; décharge à 0,1.Ic jusqu'à une tension d'arrêt de 1 volt;
- cycle 2:: charge à 0,2.Ic pendant 7,5 heures à 20°C; décharge à 0,2.Ic jusqu'à 1 volt;
- cycle 3:: charge à Ic pendant 1,2 heure à 20°C; décharge à Ic jusqu'à 1 volt.

L'accumulateur I est alors stocké à l'état déchargé à température ambiante. Au bout d'environ deux mois, on observe que la tension de l'accumulateur est devenue inférieure à la tension de stabilité de l'oxyhydroxyde de nickel (1, 05V).

Après 6 mois de stockage, on effectue une mesure de la capacité restante dans les conditions suivantes.
- cycles 4 à 9:: charge à Ic pendant 1,2 heures à 20°C; décharge à Ic jusqu'à 1 volt.

Les capacités massiques rapportées au poids du mélange de l'hydroxyde à base de nickel, du composé oxydé du cobalt et du cobalt métal, sont rassemblées dans le tableau 1. On peut constater que la perte de capacité irréversible due au stockage prolongé de l'accumulateur I comportant une électrode contenant un composé oxydé du cobalt ne comprenant pas d'élément syncristallisé est de 11 %.

### EXEMPLE 2

On réalise une électrode selon la présente invention, contenant un composé oxydé du cobalt qui est un hydroxyde à base de cobalt incluant 3 % en poids d'hydroxyde de magnésium syncristallisé. L'hydroxyde de cobalt est obtenu par un procédé de précipitation analogue à celui décrit dans l'exemple 1, à l'exception du fait que l'on introduit dans le réacteur 0,5 l d'une solution aqueuse à une concentration de 1M de sulfate de cobalt et de magnésium.

On réalise une pâte analogue à celle décrite dans l'exemple 1, à l'exception du fait qu'elle contient 6 % du composé oxydé du cobalt préparé précédemment qui est un hydroxyde de cobalt contenant du magnésium syncristallisé.

Une électrode au nickel est fabriquée de la manière décrite dans l'exemple 1. Un accumulateur II contenant cette électrode est assemblé de la manière décrite dans l'exemple 1 et un cyclage identique à l'exemple 1 est effectué.

Les capacités massiques, rapportées au poids du mélange de l'hydroxyde à base de nickel, du composé oxydé du cobalt et du cobalt métal, sont rassemblées dans le tableau 1. On remarque que le composé oxydé du cobalt réalisé précédemment, est un excellent composé conducteur pour l'électrode au nickel à support mousse et que la syncristallisation du magnésium ne modifie pas les rendements électrochimiques à un régime de décharge de 0,2.Ic ou Ic. De plus, on constate que la perte de capacité irréversible due au stockage prolongé de l'accumulateur II n'est que de 4 %, soit une réduction de 64 % par rapport à l'accumulateur I.

### EXEMPLE 3

On réalise une électrode selon la présente invention, contenant un composé oxydé du cobalt qui est un hydroxyde à base de cobalt contenant 6 % en poids d'hydroxyde de magnésium syncristallisé. L'hydroxyde de cobalt est obtenu par un procédé de précipitation analogue à celui décrit dans l'exemple 1, à l'exception du fait que l'on introduit 0,5 l d'une solution aqueuse à une concentration de 1M de sulfate de cobalt et de magnésium.

On réalise une pâte analogue à celle décrite dans l'exemple 1, à l'exception du fait qu'elle contient 6 % du composé oxydé du cobalt préparé précédemment qui est un hydroxyde de cobalt contenant du magnésium syncristallisé.

Une électrode au nickel est fabriquée de la manière décrite dans l'exemple 1. Un accumulateur III contenant cette électrode est assemblé de la manière décrite dans l'exemple 1 et un cyclage identique à l'exemple 1 est effectué.

Les capacités massiques rapportées au poids du mélange de l'hydroxyde à base de nickel, du composé oxydé du cobalt et du cobalt métal, sont rassemblées dans le tableau 1. On remarque que le composé oxydé du cobalt réalisé précédemment est un excellent composé conducteur pour l'électrode au nickel à support mousse et que la syncristallisation du magnésium ne modifie pas les rendements électrochimiques à un régime de décharge de 0,2.Ic ou Ic. De plus, on constate que la perte de capacité irréversible due au stockage prolongé de l'accumulateur III n'est que de 4 %, soit une réduction de 64 % par rapport à l'accumulateur I. Un hydroxyde de cobalt dopé au magnésium est donc un excellent composé permettant d'assurer une bonne percolation de l'électrode au nickel à support mousse et dont le produit d'oxydation est plus stable qu'un oxyhydroxyde de cobalt standard, lorsque l'accumulateur est maintenu à des potentiels inférieurs au potentiel d'oxydo-réduction du couple Co₃O₄/CoOOH.

### EXEMPLE 4

On réalise une électrode, selon la présente invention, contenant un composé oxydé du cobalt qui est un hydroxyde à base de cobalt contenant 1,5 % en poids d'hydroxyde d'aluminium syncristallisé. L'hydroxyde de cobalt est obtenu par un procédé de précipitation analogue à celui décrit dans l'exemple 1, à l'exception du fait que l'on introduit 0,5 l d'une solution aqueuse à une concentration de 1M de sulfate de cobalt et d'aluminium.

On réalise une pâte analogue à celle décrite dans l'exemple 1, à l'exception du fait qu'elle contient 6 % du composé oxydé du cobalt préparé précédemment qui est un hydroxyde de cobalt contenant de l'aluminium syncristallisé.

Une électrode au nickel est fabriquée de la manière décrite dans l'exemple 1.

Un accumulateur IV contenant cette électrode est assemblé de la manière décrite dans l'exemple 1 et un cyclage identique à l'exemple 1 est effectué.

Les capacités massiques rapportées au poids du mélange de l'hydroxyde à base de nickel, du composé oxydé du cobalt et du cobalt métal, sont rassemblées dans le tableau 1. On remarque que le composé oxydé du cobalt réalisé précédemment est un excellent composé conducteur pour l'électrode au nickel à support mousse et que la syncristallisation de l'aluminium ne modifie pas les rendements électrochimiques à un régime de décharge de 0,2.Ic ou Ic. De plus, on constate que la perte de capacité irréversible due au stockage prolongé de l'accumulateur IV n'est que de 7 %, soit une réduction de 36 % par rapport à l'accumulateur I.

### EXEMPLE 5

On réalise une électrode selon la présente invention, contenant un composé oxydé du cobalt qui est un hydroxyde à base de cobalt contenant 3 % en poids d'hydroxyde d'aluminium syncristallisé. L'hydroxyde de cobalt est obtenu par un procédé de précipitation analogue à celui décrit dans l'exemple 1, à l'exception du fait que l'on introduit 0,5 l d'une solution aqueuse à une concentration de 1M de sulfate de cobalt et d'aluminium.

On réalise une pâte analogue à celle décrite dans l'exemple 1, à l'exception du fait qu'elle contient 6 % du composé oxydé du cobalt préparé précédemment qui est un hydroxyde de cobalt contenant de l'aluminium syncristallisé.

Une électrode au nickel est fabriquée de la manière décrite dans l'exemple 1.

Un accumulateur V contenant cette électrode est assemblé de la manière décrite dans l'exemple 1 et un cyclage identique à l'exemple 1 est effectué.
Les capacités massiques rapportées au poids du mélange de l'hydroxyde à base de nickel, du composé oxydé du cobalt et du cobalt métal, sont rassemblées dans le tableau 1. On constate que la perte de capacité irréversible due au stockage prolongé de l'accumulateur V n'est que de 8 %, soit une réduction de 27 % par rapport à l'accumulateur I. Un hydroxyde de cobalt dopé à l'aluminium est donc un excellent composé permettant d'assurer une bonne percolation de l'électrode au nickel à support mousse et dont le produit d'oxydation est plus stable qu'un oxyhydroxyde de cobalt standard, lorsque l'accumulateur est maintenu à des potentiels inférieurs au potentiel d'oxydo-réduction du couple Co₃O₄/CoOOH.

**TABLEAU 1**

| Accumulateur | I | II | III | IV | V |
|---|---|---|---|---|---|
| Capacité massique cycle 2 (mAh/g) | 214 | 217 | 213 | 218 | 215 |
| Capacité massique cycle 3 (mAh/g) | 207 | 206 | 201 | 208 | 205 |
| Capacité massique cycle 9 (mAh/g) | 184 | 197 | 192 | 194 | 189 |

Bien entendu la présente invention n'est pas limitée aux modes de réalisation décrits, mais elle est susceptible de nombreuses variantes accessibles à l'homme de l'art sans que l'on ne s'écarte de l'esprit de l'invention. En particulier, on pourra sans sortir du cadre de l'invention faire varier la composition de la pâte et y introduire des additifs connus de l'homme du métier.

## Revendications

1. Electrode au nickel de type empâtée pour accumulateur à électrolyte alcalin comprenant un collecteur de courant et une pâte contenant des particules d'un hydroxyde à base de nickel et un composé oxydé pulvérulent à base de cobalt, **caractérisée en ce que** ledit composé oxydé contient au moins un autre élément syncristallisé avec le cobalt choisi parmi l'antimoine, l'argent, l'aluminium, le baryum, le calcium, le cérium, le chrome, le cuivre, l'étain, le fer, le lanthane, le manganèse, le magnésium, le plomb, le scandium, le silicium, le titane, et l'yttrium.

2. Electrode selon la revendication 1, dans laquelle ledit composé oxydé du cobalt est au degré d'oxydation +2 et peut être porté au degré d'oxydation +3 lors de la première charge, ledit élément étant choisi de telle sorte que, lorsque ladite électrode est stockée au contact dudit électrolyte, la réductibilité dudit composé soit moindre que celle d'un composé contenant seulement du cobalt.

3. Electrode selon l'une des revendications 1 et 2, dans laquelle ledit composé oxydé du cobalt est choisi parmi un oxyde de cobalt et un hydroxyde de cobalt.

4. Electrode selon la revendication 3, dans laquelle ledit composé contient une proportion dudit élément comprise entre 0,5% et 30% en poids dudit composé.

5. Electrode selon l'une des revendications précédentes, dans laquelle ledit collecteur de courant est une mousse de nickel et ladite pâte contient ladite matière active, ledit matériau conducteur, un premier liant à base de polytétrafluoroéthylène et un deuxième liant choisi parmi la carboxyméthylcellulose et l'hydroxypropylméthylcellulose.

6. Procédé de fabrication d'une électrode selon l'une des revendications précédentes, comprenant les étapes suivantes effectuées sous atmosphère non-oxydante:
a - on réalise une solution aqueuse contenant un sel de cobalt et un sel dudit élément,
b - on ajoute lentement dans ladite solution une base forte pour précipiter ledit composé,
c - on laisse séjourner ledit composé dans ladite solution pendant une durée comprise entre une heure et dix heures,
d - on sépare ledit composé de ladite solution par filtration, lavage et séchage,
e - on broie ledit composé.

7. Procédé selon la revendication 6, dans lequel le rapport du poids dudit élément au poids de cobalt dans ladite solution aqueuse est identique à celui dudit composé.

8. Procédé selon l'une des revendications 6 et 7, dans lequel ladite solution aqueuse est maintenue à une température comprise entre 20°C et 80°C.

9. Procédé selon l'une des revendications 6 à 8, dans lequel ladite base forte est ajoutée sous la forme d'une solution aqueuse, la durée de l'ajout étant comprise entre 15 minutes et 60 minutes.

10. Procédé selon l'une des revendications 6 à 9, dans lequel ledit séchage est effectué à une température comprise entre 40°C et 80°C.

11. Procédé selon l'une des revendications 6 à 10, dans lequel ledit sel de cobalt est choisi parmi un nitrate, un sulfate et un chlorure.

12. Procédé selon l'une des revendications 6 à 11, dans lequel ledit sel dudit élément est choisi parmi un nitrate, un sulfate et un chlorure.

## Claims

1. A paste type nickel electrode for a storage cell having an alkaline electrolyte, the electrode comprising a current collector and a paste containing particles of a nickel-based hydroxide and a cobalt-based powered oxidized compound, the electrode being **characterized in that** said oxidized compound contains at least one other element syncrystallized with the cobalt and selected from antimony, silver, aluminum, barium, calcium, cerium, chromium, copper, tin, iron, lanthanum, manganese, magnesium, lead, scandium, silicon, titanium, and yttrium.

2. An electrode according to claim 1, in which said oxidized compound of cobalt is at oxidation state +2 and can be raised to oxidation state +3 during the first charge, said other element being selected in such a manner that while said electrode is stored in contact with said electrolyte, the reducibility of said compound is less than that of a compound containing cobalt only.

3. An electrode according to claim 1 or 2, in which said oxidized compound of cobalt is selected from a cobalt oxide and a cobalt hydroxide.

4. An electrode according to claim 3, in which said compound contains a proportion of said element lying in the range 0.5% to 30% by weight of said compound.

5. An electrode according to any preceding claim, in which said current collector is a nickel foam and said paste contains said active material, said conductive material, a first binder based on polytetrafluoroethylene, and a second binder selected from carboxymethylcellulose, and hydroxypropylmethylcellulose.

6. A method of manufacturing an electrode according to any preceding claim, including the following steps performed under a non-oxidizing atmosphere:
a - an aqueous solution is made containing a salt of cobalt and a salt of said other element;
b - a strong base is added slowly to said solution to precipitate said compound;
c - said compound is allowed to remain in said solution for a period lying in the range 1 hour to 10 hours;
d - said compound is separated from said solution by filtering, washing, and drying; and
e - said compound is ground.

7. A method according to claim 6, in which the ratio of the weight of said element to the weight of cobalt in said aqueous solution is identical to that of said compound.

8. A method according to claim 6 or 7, in which said aqueous solution is maintained at a temperature lying in the range 20°C to 80°C.

9. A method according to any one of claims 6 to 8, in which said strong base is added in the form of an aqueous solution, the duration of addition lying in the range 15 minutes to 60 minutes.

10. A method according to any one of claims 6 to 9, in which said drying is performed at a temperature lying in the range 40°C to 80°C.

11. A method according to any one of claims 6 to 10, in which said salt of cobalt is selected from a nitrate, a sulfate, and a chloride.

12. A method according to any one of claims 6 to 11, in which said salt of said other element is selected from a nitrate, a sulfate, and a chloride.

## Patentansprüche

1. Nickelelektrode vom Pastentyp für einen Akkumulator mit alkalischem Elektrolyten, mit einem Stromkollektor und einer Paste, die Partikel eines Hydroxids auf der Basis von Nickel und eine pulverige Oxidverbindung auf der Basis von Kobalt enthält,
**dadurch gekennzeichnet, dass** die Oxidverbindung wenigstens ein weiteres, mit dem Kobalt synkristallisiertes, Element enthält, welches aus Antimon, Silber, Aluminium, Barium, Kalzium, Cer, Chrom, Kupfer, Zinn, Eisen, Lanthan, Mangan, Magnesium, Blei, Scandium, Silizium, Titan und Yttrium gewählt ist.

2. Elektrode nach Anspruch 1, bei welcher die Oxidverbindung des Kobalts auf der Oxidationsstufe +2 ist und während der ersten Ladung auf die Oxidationsstufe +3 gebracht werden kann, wobei das Element derart gewählt ist, dass wenn die Elektrode in Kontakt mit dem Elektrolyten gelagert ist, die Reduzierbarkeit der Verbindung kleiner als jene einer nur Kobalt enthaltenden Verbindung ist.

3. Elektrode nach einem der Ansprüche 1 und 2, bei welcher die Oxidverbindung des Kobalts aus einem Kobaltoxid und einem Kobalthydroxid gewählt ist.

4. Elektrode nach Anspruch 3, bei welcher die Verbindung einen Anteil des Elements enthält, der zwischen 0,5 und 30 Gew.-% der Verbindung beträgt.

5. Elektrode nach einem der vorhergehenden Ansprüche, bei welcher der Stromkollektor ein Nickelschaum ist und die Paste das aktive Material, das Leitermaterial, ein erstes Bindemittel auf der Basis von Polytetrafluorethylen und ein zweites Bindemittel, das aus Carboxymethylcellulose und Hydroxypropylmethylcellulose gewählt ist, enthält.

6. Verfahren zur Herstellung einer Elektrode nach einem der vorhergehenden Ansprüche, welches die folgenden Schritte umfasst, die unter einer nicht-oxidierenden Atmosphäre ausgeführt werden:
a) Herstellen einer wässrigen Lösung, die ein Kobaltsalz und ein Salz des Elements enthält,
b) langsames Zugeben einer starken Base in die Lösung um die Verbindung auszufällen,
c) Stehen lassen der Verbindung in der Lösung für einen Zeitraum zwischen einer Stunde und zwei Stunden,
d) Abtrennen der Verbindung von der Lösung durch Filtration, Waschen und Trocknen,
e) Zerkleinern der Verbindung.

7. Verfahren nach Anspruch 6, bei welchem das Verhältnis des Gewichts des Elements zum Gewicht von Kobalt in der wässrigen Lösung identisch zu demjenigen der Verbindung ist.

8. Verfahren nach einem der Ansprüche 6 und 7, bei welchem die wässrige Lösung auf einer Temperatur zwischen 20°C und 80°C gehalten wird.

9. Verfahren nach einem der Ansprüche 6 bis 8, bei welchem die starke Base in Form einer wässrigen Lösung zugegeben wird, wobei die Dauer des Zugebens zwischen 15 Minuten und 60 Minuten beträgt.

10. Verfahren nach einem der Ansprüche 6 bis 9, bei welchem das Trocknen bei einer Temperatur zwischen 40°C und 80°C erfolgt.

11. Verfahren nach einem der Ansprüche 6 bis 10, bei welchem das Kobaltsalz aus einem Nitrat, einem Sulfat und einem Chlorid gewählt ist.

12. Verfahren nach einem der Ansprüche 6 bis 11, bei welchem das Salz des Elements aus einem Nitrat, einem Sulfat und einem Chlorid gewählt ist.
